# EUROPÄISCHE PATENTSCHRIFT

(11) **EP 4 211 507 B1**
(45) Veröffentlichungstag und Bekanntmachung des Hinweises auf die Patenterteilung: **29.10.2025**
(21) Anmeldenummer: 21730197.7
(22) Anmeldetag: 02.06.2021
(51) Int. Cl.: G02B 21/00, G02B 21/18, G02B 21/36

(54) **OPERATIONSMIKROSKOP MIT MINDESTENS ZWEI KAMERAEINRICHTUNGEN**
SURGICAL MICROSCOPE HAVING AT LEAST TWO CAMERA DEVICES
MICROSCOPE CHIRURGICAL COMPRENANT AU MOINS DEUX DISPOSITIFS DE CAMÉRA

(30) Priorität: 08.09.2020 DE 102020123365
(43) Veröffentlichungstag der Anmeldung: 19.07.2023
(73) Patentinhaber: Munich Surgical Imaging GmbH, 80799 München (DE)
(72) Erfinder: ENGELHARDT, Ralf, 23568 Lübeck (DE); FRITZ, Andreas, 23560 Lübeck (DE); GEISSLER, Peter, 81379 München (DE); KIENING, Hans, 83661 Lenggries (DE)
(74) Vertreter: Wesch, Arno
(86) Internationale Anmeldenummer: PCT/EP2021/064745
(87) Internationale Veröffentlichungsnummer: WO 2022/053189

(56) Entgegenhaltungen:
- WO-A1-2005/034747
- DE-A1- 102005 005 253
- DE-A1- 102010 044 502
- DE-A1- 102015 100 765
- DE-B3- 102018 110 643
- DE-B3- 102019 118 508
- DE-T5- 112015 001 241

## Beschreibung

Die Erfindung betrifft ein Operationsmikroskop nach dem Oberbegriff des Anspruchs 1.

Aus der DE 10 2005 005 253 A1 ist ein Untersuchungssystem für einen ersten Benutzer und einen zweiten Benutzer bekannt, welches zwei Kameras und zwei Okularsysteme aufweist. Die DE 10 2015 100 765 A1 offenbart ein Operationsmikroskop zum Generieren eines Bildes, in dem Augenlinsenstücke hervorgehoben sind. DE 10 2018 110643 B3 offenbart ein Operationsmikroskop mit zwei Kameraeinrichtungen, deren Bilder zu einem Gesamtbild kombiniert werden können.

Es ist bereits bekannt, sogenannte Reflexionsbilder von organischem Gewebe zu erfassen. Dabei wird Licht auf zu untersuchendes Gewebe geleitet und vom Gewebe reflektiertes Licht zur Erzeugung von Reflexionsbildern erfasst. Es ist auch bekannt, sogenannte Fluoreszenzbilder von organischem Gewebe zu erfassen. Im Gewebe kann beispielsweise Fluorescein als Indikator verteilt und durch Licht zur Fluoreszenz angeregt werden. Fluorescein ist ein Farbstoff, der fluoresziert und insbesondere in der Augenheilkunde als Indikator verwendet wird.

Vor diesem Hintergrund werden derzeit Operationsmikroskope verwendet, mit denen organisches Gewebe untersucht werden kann. Operationsmikroskope werden von Ärzten verschiedenster medizinischer Fachrichtungen verwendet, um während einer Operation Bilder von Organen oder Organbereichen zu erfassen und um anhand dieser Bilder eine ärztliche Diagnose zu fällen.

Unabhängig von der medizinischen Disziplin wird von Chirurgen immer wieder die Schärfentiefe von kamerabasierten Operationsmikroskopen kritisiert.

Der Erfindung liegt daher die Aufgabe zu Grunde, ein Operationsmikroskop anzugeben, das eine möglichst genaue Erfassung und bildliche Darstellung von Gewebestrukturen erlaubt.

Die vorliegende Erfindung löst die zuvor genannte Aufgabe durch die Merkmale des Anspruchs 1.

Durch die Verwendung von zwei simultan arbeitenden Kameraeinrichtungen ist eine gleichzeitige Erfassung und Darstellung von Reflexionsbildern und weiteren Bildern, wie beispielsweise Fluoreszenzbildern, ermöglicht. Durch zwei Kameraeinrichtungen können zwei Kameraebenen geschaffen werden, wobei sich die Kameraeinrichtungen bei der Bilderfassung und Darstellung ergänzen und so Qualitätseinbußen bei der Bilderfassung kompensieren können. Wenn mindestens eine der Kameraeinrichtungen aus zwei Kameras in einer Stereo-Anordnung besteht, kann optisch ein räumlicher Eindruck beim Benutzer erzeugt werden. Das Gewebe kann sehr umfassend untersucht und betrachtet werden. Auf eine zeitlich alternierende Aufnahme und Darstellung zweier Abbildungsmodi, wie beispielsweise Reflexionsmodus und Fluoreszenzmodus, kann aufgrund einer hierfür erforderlichen flackernden Beleuchtung und den damit verbundenen störenden Effekten verzichtet werden.

Erfindungsgemäß ist einem Operationsmikroskop eine zweite Kameraebene zugeordnet. Die zweite Kameraebene bietet neben der zeitgleichen Fluoreszenzdarstellung noch weitere Möglichkeiten der optischen Darstellungsverbesserung, wie z.B. das sogenannte Focus Stacking, eine Erhöhung der Auflösung durch eine Zwischenabtastung, eine Reduktion des Rauschens (engl. "Noise Reduction") und eine Erweiterung des Dynamikbereichs durch unterschiedliche Belichtung der verschiedenen Kameraeinheiten oder Kameraeinrichtungen.

Unter "Focus Stacking", was wörtlich übersetzt "Fokus-Stapelung" bedeutet, versteht der Fachmann den Begriff Schärfentiefeerweiterung, die durch eine Kombination von optisch-fotografischen Erfassungstechniken und digitaler Bildbearbeitung oder Bildverarbeitung realisiert wird. So können Bilder mit sehr hoher Schärfentiefe erzeugt werden.

Vor diesem Hintergrund weist jede Kameraeinrichtung mindestens zwei einzelne Kameras auf. Beide bevorzugten Abbildungsmodi, nämlich Reflexionsmodus und Fluoreszenzmodus, erzeugen jeder einen dreidimensionalen Eindruck beim Benutzer. Zur Erzeugung dieses dreidimensionalen Eindrucks werden pro Kameraeinrichtung jeweils zwei Detektionskanäle verwendet. Beide Detektionskanalpaare verwenden bevorzugt die gleichen Zoomoptiken, um den Aufbau einer optischen Anordnung so einfach wie möglich zu halten.

Mindestens eine Kameraeinrichtung oder beide Kameraeinrichtungen könnte bzw. könnten Bildaufzeichnungen im Videomodus vornehmen. So können auch Bewegungen des Gewebes gut erfasst werden. Beide bevorzugten Abbildungsmodi, nämlich Reflexionsmodus und Fluoreszenzmodus, können aufgrund von Videoaufzeichnungen erfolgen. So kann eine in-situ-Untersuchung des Gewebes aber auch eine zeitlich spätere Überprüfung der Videoaufzeichnungen vorzugsweise außerhalb eines Operationssaals erfolgen.

Das weitere Bild könnte als Fluoreszenzbild des Objekts ausgestaltet sein. So können Reflexionsbilder und Fluoreszenzbilder des gleichen Objekts zeitgleich aufgenommen, dargestellt und ausgewertet werden.

Vor diesem Hintergrund könnte eine Beleuchtungseinrichtung eine Fluoreszenzanregungslichtquelle aufweisen. Alternativ könnten zwei Beleuchtungseinrichtungen mit je einer Fluoreszenzanregungslichtquelle vorgesehen sein.

Insoweit besteht für das Operationsmikroskop zunächst nur eine Grundbauform, die aber um weitere Lichtquellen ergänzt werden kann.

Bei einer weiteren Ausführungsform des Operationsmikroskop könnte bei der Detektion der Fluoreszenz eine vorhandene Lichtquelle zur Erzeugung von Reflexionsbildern ausgeschaltet werden. Hierdurch sind keine weiteren Filter erforderlich, um einen Wellenlängenbereich auszublenden, bei dem Fluoreszenz stattfindet.

Es könnte ein Blockingfilter oder auch Sperrfilter vorgesehen sein, welches beiden Kameraeinrichtungen optisch vorgelagert ist, so dass eine auf beide Kameraeinrichtungen einfallende Lichtbündelkomponente das Blockingfilter durchlaufen muss. Für einen Fluoreszenzmodus muss eine hinreichend große spektrale Leistungsdichte bei der Wellenlänge des Anregungslichts der Beleuchtungseinrichtung gegeben sein. Spektralbereiche des Anregungslichts oder des als Reflexionslicht reflektierten Anregungslichts können für beide Kamerapaare durch das Blockingfilter simultan ausgeblendet werden.

Das Blockingfilter könnte vor diesem Hintergrund z. B. Licht mit einer Wellenlänge aus dem Wellenlängenbereich 480 nm bis 490 nm nicht hindurchlassen oder zumindest unterdrücken. Durch Anregungslicht der Wellenlänge 485 nm wird Fluorescein zum Fluoreszieren angeregt. Bevorzugt kann das Anregungslicht für jede Wellenlänge individuell ausgeblendet werden. Bei einer schmalbandigen Anregung, wie sie durch einen Laser erzeugt werden kann, kann das Blockingfilter auch bei anderen Modi im Strahlengang verbleiben und/ oder statisch ausgestaltet sein, wenn außerdem ein Weißabgleich möglich ist. Bevorzugt ist in der optischen Anordnung konstruktiv eine Möglichkeit zum Filterwechsel vorgesehen.

Wenn das Operationsmikroskop im Fluoreszenzmodus arbeitet, muss der bei einer jeweiligen Fluoreszenz detektierte Wellenlängenbereich aus dem Spektrum der Beleuchtungseinrichtung rausgefiltert werden, damit die Fluoreszenzerfassung auf der bzw. durch die zweite Kameraeinrichtung nicht von als Reflexionslicht reflektiertem bzw. rückfallendem Anregungslicht überlagert wird. Dies wird bevorzugt durch ein Lichtmodul, welches bevorzugt nicht in der Kameraeinrichtung vorgesehen ist, realisiert.

Im Fluoreszenzmodus muss das Licht, das auf die zweite Kameraeinrichtung auftrifft, durch ein passendes Bandpassfilter oder Bandbreitenfilter für die zu detektierende Wellenlänge gefiltert werden, um das auf die zweite Kameraeinrichtung einfallende Reflexionslicht des Anregungslichts auszublenden. Dieses Bandpassfilter könnte für verschiedene Farbstoffe bevorzugt umschaltbar sein oder könnte wegschaltbar sein, wenn andere Modi aktiv sind.

Vor diesem Hintergrund könnte ein Bandpassfilter vorgesehen sein, welches der zweiten Kameraeinrichtung optisch vorgelagert ist, so dass eine auf die zweite Kameraeinrichtung einfallende Lichtbündelkomponente das Bandpassfilter durchlaufen muss, bevor es auf die zweite Kameraeinrichtung auftrifft.

Das Bandpassfilter könnte daher z. B. Licht mit einer Wellenlänge aus dem Wellenlängenbereich 510 nm bis 540 nm hindurchlassen und den restlichen Spektralbereich nicht hindurchlassen oder zumindest unterdrücken. Hierdurch wird ein Großteil des Fluoreszenzlichts von Fluorescein auf die zweite Kameraeinrichtung durchgelassen und eher unwesentliches Licht ausgeblendet.

Vor diesem Hintergrund ist daher auch eine optische Anordnung denkbar, bei der das Blockingfilter nicht vorhanden ist, wenn nämlich das Bandpassfilter vor der zweiten Kameraeinrichtung das als Reflexionslicht reflektierte Anregungslicht komplett unterdrückt und die hohe spektrale Leistungsdichte bei der Wellenlänge des Anregungslichts während der gleichzeitig erfolgenden Darstellung des Reflexionsbildes über oder durch die erste Kameraeinrichtung toleriert bzw. korrigiert werden kann. Wenn kein Blockingfilter vorhanden ist, muss das Bandpassfilter auch die hohe spektrale Leistungsdichte des Anregungslichts unterdrücken. Das Blockingfilter ist dann bevorzugt im Bandpassfilter integriert.

Im Strahlengang zwischen einem Objektiv über der Probe und den beiden Kameraeinrichtungen könnte mindestens ein Strahlteiler, bevorzugt ein 50:50 Strahlteiler, angeordnet sein, auf welchen eine erste Lichtbündelkomponente zur Aufspaltung in eine zweite und eine dritte Lichtbündelkomponente leitbar ist. Durch diesen Strahlteiler kann zumindest ein Teil des Lichts, welches von der Probe reflektiert wird oder als Fluoreszenzlicht abgestrahlt wird, nämlich Reflexionslicht und Fluoreszenzlicht beiden Kameraeinrichtungen simultan zugeleitet werden.

Vor diesem Hintergrund könnte der Strahlteiler die zweite Lichtbündelkomponente in Richtung der ersten Kameraeinrichtung leiten und die dritte Lichtbündelkomponente durch ein Bandpassfilter vor der zweiten Kameraeinrichtung auf diese leiten. So kann der ersten Kameraeinrichtung Licht für Reflexionsbilder und der zweiten Kameraeinrichtung Licht für Fluoreszenzbilder gefiltert zugeleitet werden.

Es könnte auch zusätzlich eine OCT-Vorrichtung vorgesehen sein, durch deren Abtastlicht die Probe untersuchbar ist. So können neben Reflexionsbildern und Fluoreszenzbildern auch noch OCT-Bilder in bekannter Weise aufgenommen werden. Unter der Bezeichnung optische Kohärenztomografie (in englischer Sprache "Optical Coherence Tomography", üblicherweise abgekürzt durch OCT) wird ein bildgebendes Verfahren verstanden. Mit diesem Verfahren können zwei- und dreidimensionale Bilder aus lichtstreuenden organischen Geweben gewonnen werden.

Unabhängig von der medizinischen Disziplin wird von Chirurgen immer wieder die Schärfentiefe von kamerabasierten Operationsmikroskopen kritisiert. Durch die fehlende Akkomodationsmöglichkeit des Betrachters reduziert sich die Schärfentiefe auf die durch die geometrische Blende vorgegebene numerische Apertur des Objektivs des Operationsmikroskops.

Eine Reduzierung des Blendendurchmessers zur Erhöhung der Schärfentiefe ist nur begrenzt möglich, weil diese sowohl mit einer ggf. nicht umsetzbaren Helligkeitserhöhung einhergeht, was letztlich eine thermische Belastung des Gewebes bewirkt, als auch mit einer Signalverstärkung einhergeht, wodurch ein Anstieg des Rauschens erfolgt, und mit einem Abfall der MTF einhergeht, wodurch eine geringere Auflösung entsteht.

Mit der Abkürzung MTF wird die sogenannte Modulationsübertragungsfunktion, Modulationstransferfunktion oder Kontrastübertragungsfunktion bezeichnet, welche einen Vergleich zwischen dem Detailkontrast an Kanten eines Objektes und dem Detailkontrast dessen bildlicher Darstellung mathematisch beschreibt.

Vor diesem Hintergrund weist ein Operationsmikroskop gemäß der beanspruchten Erfindung eine Bildverarbeitungseinrichtung auf, welche mindestens ein erstes Bild, das von der ersten Kameraeinrichtung aufgenommen ist, mit mindestens einem weiteren Bild verbindet, welches mit der zweiten Kameraeinrichtung aufgenommen ist, wobei die Bilder aufgrund einer vordefinierten Schärfenqualität der Bilder durch die Bildverarbeitungseinrichtung ausgewählt und zu einem Gesamtbild zusammengefügt sind.

Die hier beschriebene zweite Kameraeinrichtung, nämlich eine zweite Kameraebene, kann u.a. dazu genutzt werden, Bereiche akzeptabler Schärfe aneinander zu stückeln. Dabei würde die Abbildungsebene der zweiten Kameraebene relativ zur ersten um z. B. die Hälfte des Schärfentiefenbereiches verschoben. Das finale Bild oder Gesamtbild würde dann algorithmisch aus beiden Schichtaufnahmen bzw. Bildern kombiniert.

Es könnten zusätzlich statische oder temporale Denoising-Algorithmen zur Rauschreduzierung verwendet werden, mit denen parametrierbar Rauschen unterdrückt werden kann. Durch die Synchronisierung der Abtastung beider Kameraebenen oder Kameraeinrichtungen könnten auch Verfahren Anwendung finden, die auf einer zeitlichen Mittelung basieren. Es kann eine sogenannte zeitliche Überabtastung stattfinden.

In der ersten und/ oder zweiten Kameraeinrichtung könnten Bildsensoren vorgesehen sein, welche für Infrarotlicht empfindlich sind, bevorzugt für Infrarotlicht aus dem Wellenlängenbereich 1000 bis 1500 nm. Für eine hyperspektrale Bildgebung, zum Beispiel im Infrarotbereich bis 1500 nm könnten Bildsensoren verwendet werden, die im fernen Infrarot empfindlich sind und zur spektralen Gewebedifferenzierung verwendet werden. Eine Tumorerkennung erfolgt bevorzugt im Spektralbereich 1000-1500 nm.

Eine Auflösungserhöhung könnte durch Überabtastung, sogenanntes Oversampling, erfolgen. Durch diagonales Verschieben zweier Abtastraster zueinander um einen halben Pixel kann die Auflösung um etwa das 1.4fache, letztlich Wurzel2-fache, erhöht werden.

Bei einem sogenannten Downsampling auf die Anzeigegröße des Bildes, beispielsweise HD oder 4K, kann die Form der MTF und damit die Schärfe des Bildes beeinflusst werden.

Der Vorteil dieser Technik führt primär nicht zu einer Auflösungserhöhung, sondern zu einem schärferen Bild. Dies geht auf das Anheben der niedrigen Ortsfrequenzen zurück. Darüber hinaus könnte man das Oversample-Bild für eine verlustfreie digitale Vergrößerung und/ oder einen Zoom verwenden.

Durch unterschiedliche Verstärkung oder unterschiedliche Beleuchtung oder unterschiedliche Belichtung beider Kameraebenen oder Kameraeinrichtungen könnte ein Dynamikbereich vergrößert werden.

Eine Besonderheit liegt im Verrechnen der Kennlinien beider Bildpaare, d.h. die Nahtstelle im Übergangsbereich so zu gestalten, dass ein artefaktfreies HDR Bild entsteht.

In der Zeichnung zeigen
- Fig. 1: eine schematische Darstellung einer optischen Anordnung in einem kamerabasierten Operationsmikroskop,
- Fig. 2: oben, das Transmissionsverhalten eines Blockingfilters, das die Transmission eines Wellenlängenbereichs um 485 nm mit einer Breite ca. 5 nm sperrt und sichtbares Licht des restlichen Wellenlängenbereichs durchlässt, in der Mitte das Transmissionsverhalten eines Bandpassfilters, das für den Wellenlängenbereich 510 bis 540 nm transparent ist und den gesamten restlichen Spektralbereich, für den die zweiten Kameras empfindlich sind, sperrt, unten ein Beleuchtungsspektrum, aus dem der Spektralbereich 510 bis 540 nm ausgeblendet wird, und
- Fig. 3: ein schematisches Beispiel für eine Kombination von drei Bildern, nämlich Schichtaufnahmen, die durch Aneinanderstückelung zu einem Gesamtbild zusammengefügt sind.

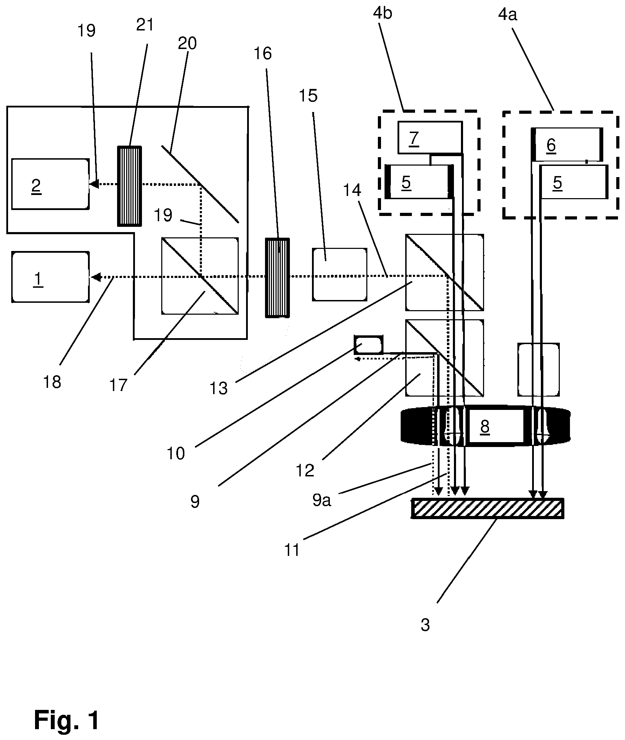

Fig. 1 zeigt ein Operationsmikroskop, umfassend eine erste Kameraeinrichtung 1 zur Erfassung und Darstellung eines Reflexionsbilds eines Objekts, wobei das Operationsmikroskop eine zweite Kameraeinrichtung 2 zur gleichzeitigen Erfassung und Darstellung eines weiteren Bilds des Objekts aufweist.

Fig. 1 zeigt auch eine Anordnung zur Verwendung in einem Operationsmikroskop, umfassend eine erste Kameraeinrichtung 1 zur Erfassung und Darstellung von Reflexionsbildern. Die Anordnung ist gekennzeichnet durch eine zweite Kameraeinrichtung 2 zur gleichzeitigen Erfassung und Darstellung von Fluoreszenzbildern. Das weitere Bild ist insoweit ein Fluoreszenzbild.

Jede Kameraeinrichtung 1, 2 weist mindestens zwei Kameras auf. Jede Kameraeinrichtung 1, 2 ist insoweit ein Kamerapaar. Mindestens eine Kameraeinrichtung 1, 2 oder beide Kameraeinrichtungen 1, 2 nimmt bzw. nehmen Bildaufzeichnungen im Videomodus vor. Die erste Kameraeinrichtung 1 dient der Erfassung von Reflexionsbildern. Die zweite Kameraeinrichtung 2 dient der Erfassung von Fluoreszenzbildern.

Es ist mindestens eine Beleuchtungseinrichtung 4a, 4b mit einer Fluoreszenzanregungslichtquelle 5 vorgesehen oder es sind zwei Beleuchtungseinrichtungen 4a, 4b mit je einer Fluoreszenzanregungslichtquelle 5 vorgesehen. Eine Beleuchtungseinrichtung 4a, 4b umfasst eine Umfeldbeleuchtungslichtquelle 6 und/ oder eine SCI-Lichtquelle 7. Die Abkürzung SCI steht für "Stereo Confocal Illumination".

Die Beleuchtung des Objekts, nämlich einer Probe 3, insbesondere eines organischen Gewebes, kann insoweit mittels zweier Alternativen erfolgen. Gemäß der ersten Alternative umfasst eine erste Beleuchtungseinrichtung 4a als Fluoreszenzanregungslichtquelle 5 eine Umfeldbeleuchtungslichtquelle 6. Die Fluoreszenzbeleuchtung wird durch die Umfeldbeleuchtungslichtquelle 6 erzeugt.

Gemäß einer zweiten Alternative umfasst eine zweite Beleuchtungseinrichtung 4b als Fluoreszenzanregungslichtquelle 5 eine SCI-Lichtquelle 7.

In einer ersten Ausführungsform der Anordnung fehlt die SCI-Lichtquelle 7. Dieses Operationsmikroskop stellt eine Grundbauform dar. In einer weiteren Bauform kann bei der Detektion der Fluoreszenz eine physisch vorhandene SCI-Lichtquelle 7 ausgeschaltet werden.

Das Anregungslicht fällt von einer Beleuchtungseinrichtung 4a, 4b durch ein Objektiv 8 hindurch auf die Probe 3 und regt diese zur Abgabe von Fluoreszenzlicht an, da in der Probe 3 Fluorescein vorhanden ist. Zugleich wird das auf die Probe 3 einfallende Anregungslicht von der Probe 3 zumindest teilweise als Reflexionslicht reflektiert.

Außerdem fällt gemäß einer besonderen Ausführungsform der Anordnung noch Abtastlicht 9 von einer OCT-Vorrichtung 10 auf die Probe 3, um diese weitergehend untersuchen zu können.

Das von der Probe 3 auf das eingestrahlte Anregungslicht der Beleuchtungseinrichtung 4a, 4b hin reflektierte Reflexionslicht und das Fluoreszenzlicht, in Fig. 1 repräsentiert durch ein Rückfalllichtstrahlbündel 11, durchläuft oder umgeht zunächst einen ersten Strahlteiler 12 und durchläuft dann einen zweiten Strahlteiler 13. Von der Probe 3 auf das Abtastlicht 9 der OCT-Vorrichtung 10 hin zurückgeworfenes Licht 9a wird durch den ersten Strahlteiler 12 der OCT-Vorrichtung 10 zur weiteren Verarbeitung zugeleitet.

Vom zweiten Strahlteiler 13 wird eine erste Lichtbündelkomponente 14 durch eine Zoomoptik 15, beispielsweise ein Objektiv mit veränderlicher Brennweite, durch ein Blockingfilter 16 auf einen dritten Strahlteiler 17, nämlich einen 50:50-Strahlteiler, gelenkt. Die erste Lichtbündelkomponente 14 wird in eine zweite Lichtbündelkomponente 18 und in eine dritte Lichtbündelkomponente 19 aufgespalten. Der dritte Strahlteiler 17 könnte in einer weiteren Ausführungsform dichroitisch ausgestaltet sein.

Die zweite Lichtbündelkomponente 18 fällt auf die erste Kameraeinrichtung 1 zur Erzeugung von Reflexionsbildern. Die dritte Lichtbündelkomponente 19 fällt nach Umlenkung durch einen Spiegel 20 und nach Durchlaufen eines Bandpassfilters 21 auf die zweite Kameraeinrichtung 2 zur Erzeugung von Fluoreszenzbildern.

Das Blockingfilter 16 ist in einer Ausführungsform der Anordnung beiden Kameraeinrichtungen 1, 2 so vorgelagert, dass eine auf die Kameraeinrichtungen 1, 2 einfallende erste Lichtbündelkomponente 14 das Blockingfilter 16 durchlaufen muss. Das Blockingfilter 16 lässt Licht mit einer Wellenlänge aus dem Wellenlängenbereich 480 nm bis 490 nm nicht hindurch.

Das Bandpassfilter 21 ist der zweiten Kameraeinrichtung 2 so vorgelagert, dass eine auf die zweite Kameraeinrichtung 2 einfallende dritte Lichtbündelkomponente 19 das Bandpassfilter 21 durchlaufen muss. Das Bandpassfilter 21 lässt Licht mit einer Wellenlänge aus dem Wellenlängenbereich 510 nm bis 540 nm hindurch und Licht des restlichen Spektralbereichs nicht.

Im Strahlengang zwischen dem Objektiv 8 und den beiden Kameraeinrichtungen 1, 2 ist bei allen Ausführungsformen der dritte Strahlteiler 17 angeordnet, auf den die erste Lichtbündelkomponente 14 zur Aufspaltung in die zweite und dritte Lichtbündelkomponente 18, 19 leitbar ist. Der dritte Strahlteiler 17 leitet die zweite Lichtbündelkomponente 18 in Richtung der ersten Kameraeinrichtung 1 und die dritte Lichtbündelkomponente 19 durch den Bandpassfilter 21 vor der zweiten Kameraeinrichtung 2 auf diese.

Das optional vorgesehene Blockingfilter 16 und das Bandpassfilter 21 sollen das Anregungslicht rausfiltern, welches insbesondere als Reflexionslicht auf die zweite Kameraeinrichtung 2 treffen und die Detektion der eigentlichen Fluoreszenz stören könnte.

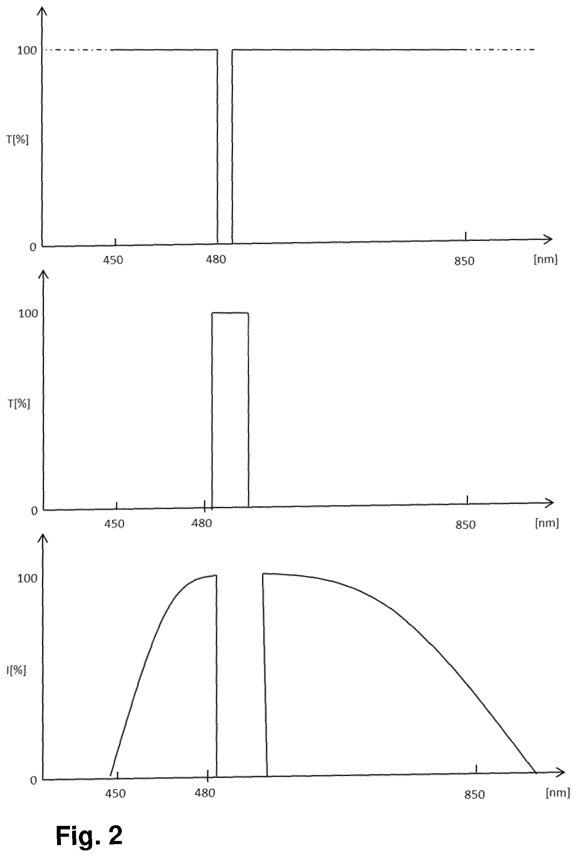

Eine Anregung des bekannten Indikators Fluorescein durch Anregungslicht der Beleuchtungseinrichtung 4a, 4b erfolgt bevorzugt bei einer Wellenlänge von 485 nm. Licht mit dieser Wellenlänge ist blau. Mehr als 80% der durch dieses Licht angeregten Fluoreszenz tritt im Bereich 510 bis 540 nm auf. Je nach der Breite des Spektrums des Anregungslichts muss somit das Blockingfilter 16 die Wellenlängen um 485 nm mit einer Breite von ca. 5 nm blockieren, aber den restlichen sichtbaren Bereich durchlassen. Dieses optische Verhalten ist in Fig. 2 ganz oben schematisch dargestellt. Das Blockingfilter 16 ist nicht unbedingt erforderlich, so dass in einer Ausführungsform der Anordnung das Blockingfilter 16 fehlen kann.

Das Bandpassfilter 21 ist für das zu detektierende Fluoreszenzlicht mit Wellenlängen im Bereich 510 bis 540 nm transparent und blockiert den gesamten restlichen Spektralbereich, für den die zweite Kameraeinrichtung 2 empfindlich sein könnte. Dieses optische Verhalten des Bandpassfilters 21 ist in Fig. 2 in der Mitte dargestellt. Insbesondere muss die hohe spektrale Leistungsdichte des Anregungslichts blockiert werden.

Aus dem Spektrum des Anregungslichts der Beleuchtungseinrichtung 4a, 4b könnte der Spektralbereich 510 bis 540 nm ausgeblendet werden. Bei der Wellenlänge 485 nm muss aber die erforderliche Leistungsdichte zur Verfügung gestellt werden. Dies ist in Fig. 2 ganz unten dargestellt. Die Beleuchtungseinrichtung 4a, 4b könnte daher mit einem, vorzugsweise einstellbaren, Filter versehen sein, welches jede Fluoreszenzlichtwellenlänge blockieren kann, damit diese nicht als störendes Reflexionslicht auf die zweite Kameraeinrichtung 2 fällt. Jede Einstellposition dieses Filters repräsentiert eine realisierbare Fluoreszenzlichtwellenlänge und eine Grundposition einen Neutralzustand.

Zur Realisierung des Blockingfilters 16 könnte ein Filterrad mit x Positionen in den relevanten Strahlengängen vorgesehen sein. Jede Einstellposition repräsentiert dann eine realisierte Fluoreszenzlichtwellenlänge und eine Grundposition einen Neutralzustand. Zur Realisierung des Bandpassfilters 21 könnte ebenfalls ein Filterrad mit x Positionen in den relevanten Strahlengängen vor der zweiten Kameraeinrichtung 2 vorgesehen sein. Jede Einstellposition repräsentiert eine realisierte Fluoreszenzlichtwellenlänge und eine Grundposition einen Neutralzustand.

So könnte jeder Wellenlängenbereich aus dem Anregungslicht oder als Reflexionslicht reflektierten Anregungslicht der Beleuchtungseinrichtung 4a, 4b ausgefiltert werden, in dem Fluoreszenz detektiert wird.

Die Anregung der Fluoreszenz könnte auch durch einen Laser mit ca. 488 nm Wellenlänge erfolgen. Es kann Fluoreszenz aufgenommen werden oder ein durch den Laser erzeugtes Reflexionsbild. In beiden Fällen erhält man ca. 1/10.000 des eingestrahlten Lichts zurück, d.h. ein Blau-Bild hat die gleichen Graustufen wie ein Fluoreszenzbild.

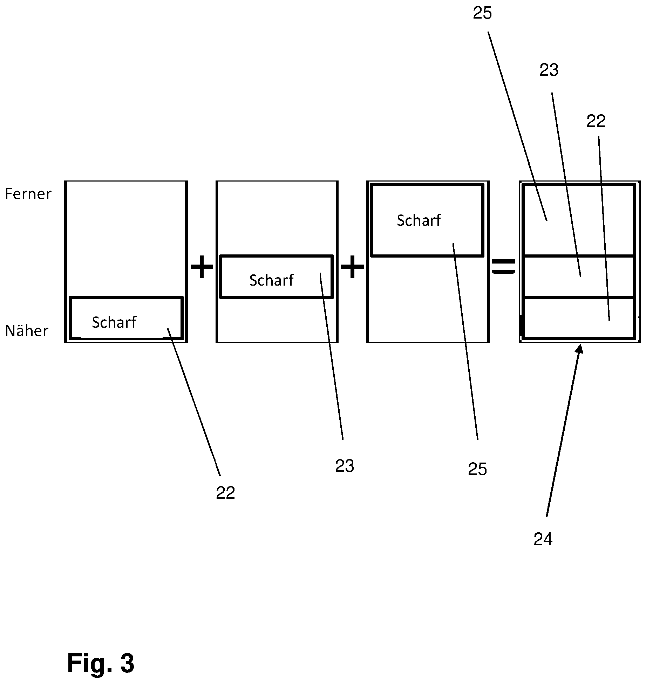

Fig. 3 zeigt, dass eine Ausführungsform eines Operationsmikroskop: gemäß der beanspruchten Erfindung eine Bildverarbeitungseinrichtung aufweist, welche mindestens ein erstes Bild 22, das von einer ersten Kameraeinrichtung 1 aufgenommen ist, mit mindestens einem weiteren Bild 23 verbindet, welches mit einer zweiten Kameraeinrichtung 2 aufgenommen ist, wobei die Bilder 22, 23 aufgrund einer vordefinierten Schärfenqualität der Bilder 22, 23 durch die Bildverarbeitungseinrichtung ausgewählt und zu einem Gesamtbild 24 zusammengefügt sind. Das Gesamtbild 24 weist des Weiteren noch ein drittes Bild 25 auf, welches aufgrund seiner Schärfe zur gestückelten Zusammensetzung des Gesamtbildes 24 ausgewählt wurde.

### Bezugszeichenliste:

- 1: Erste Kameraeinrichtung
- 2: Zweite Kameraeinrichtung
- 3: Probe
- 4a: Erste Beleuchtungseinrichtung
- 4b: Zweite Beleuchtungseinrichtung
- 5: Fluoreszenzanregungslichtquelle
- 6: Umfeldbeleuchtungslichtquelle von 4a
- 7: SCI-Lichtquelle von 4b
- 8: Objektiv
- 9: Abtastlicht
- 9a: von 3 rückgeworfenes Licht
- 10: OCT-Vorrichtung / OCT-Interferometer
- 11: Rückfalllichtstrahlbündel
- 12: Erster Strahlteiler
- 13: Zweiter Strahlteiler
- 14: Erste Lichtbündelkomponente
- 15: Zoomoptik
- 16: Blockingfilter
- 17: Dritter Strahlteiler
- 18: Zweite Lichtbündelkomponente
- 19: Dritte Lichtbündelkomponente
- 20: Spiegel
- 21: Bandpassfilter
- 22: Erstes Bild
- 23: Zweites oder weiteres Bild
- 24: Gesamtbild
- 25: Drittes Bild

## Patentansprüche

1. Operationsmikroskop, umfassend eine erste Kameraeinrichtung (1) zur Erfassung und Darstellung eines Reflexionsbilds eines Objekts, eine zweite Kameraeinrichtung (2) zur gleichzeitigen Erfassung und Darstellung eines weiteren Bilds des Objekts, und eine Bildverarbeitungseinrichtung, welche dazu eingerichtet ist, mindestens ein erstes Bild (22), das von der ersten Kameraeinrichtung (1) aufgenommen ist, mit mindestens einem weiteren Bild (23) zu verbinden, welches mit der zweiten Kameraeinrichtung (2) aufgenommen ist, wobei die Bilder (22, 23) durch die Bildverarbeitungseinrichtung ausgewählt und zu einem Gesamtbild (24) zusammengefügt sind, **dadurch gekennzeichnet, dass** das Auswahlkriterium eine vordefinierte Schärfenqualität der Bilder (22, 23) ist.

2. Operationsmikroskop nach Anspruch 1, **dadurch gekennzeichnet, dass** mindestens eine Kameraeinrichtung (1, 2) mindestens zwei Kameras aufweist.

3. Operationsmikroskop nach Anspruch 1 oder 2, **dadurch gekennzeichnet, dass** mindestens eine Kameraeinrichtung (1, 2) dazu eingerichtet ist oder beide Kameraeinrichtungen (1, 2) dazu eingerichtet sind, Bildaufzeichnungen im Videomodus vorzunehmen.

4. Operationsmikroskop nach einem der voranstehenden Ansprüche, **dadurch gekennzeichnet, dass** die Kameraeinrichtungen dazu eingerichtet sind, die Bilder in Echtzeit, bevorzugt nahezu verzögerungsfrei, darzustellen.

5. Operationsmikroskop nach einem der voranstehenden Ansprüche, **dadurch gekennzeichnet, dass** mindestens eine Kameraeinrichtung (1, 2) dazu eingerichtet ist oder beide Kameraeinrichtungen (1, 2) dazu eingerichtet sind, dreidimensionale Bildaufzeichnungen vorzunehmen.

6. Operationsmikroskop nach einem der voranstehenden Ansprüche, **dadurch gekennzeichnet, dass** die beiden Kameraeinrichtungen (1, 2) dazu eingerichtet sind, unterschiedliche Lichtintensitäten aufzunehmen.

7. Operationsmikroskop nach einem der voranstehenden Ansprüche, **dadurch gekennzeichnet, dass** die beiden Kameraeinheiten oder Kameraeinrichtungen (1, 2) dazu eingerichtet sind, mit unterschiedlichen Belichtungszeiten zu arbeiten.

8. Operationsmikroskop nach einem der voranstehenden Ansprüche, **dadurch gekennzeichnet, dass** das weitere Bild als Fluoreszenzbild des Objekts ausgestaltet ist.

9. Operationsmikroskop nach einem der voranstehenden Ansprüche, **dadurch gekennzeichnet, dass** mindestens eine Beleuchtungseinrichtung (4a, 4b) mit einer Fluoreszenzanregungslichtquelle (5) vorgesehen ist.

10. Operationsmikroskop nach einem der voranstehenden Ansprüche, **dadurch gekennzeichnet, dass** ein Bandpassfilter (21) vorgesehen ist, welches der zweiten Kameraeinrichtung (2) so vorgelagert ist, dass eine auf die zweite Kameraeinrichtung (2) einfallende Lichtbündelkomponente (19) das Bandpassfilter (21) durchlaufen muss.

11. Operationsmikroskop nach einem der voranstehenden Ansprüche, **dadurch gekennzeichnet, dass** in der ersten und/ oder zweiten Kameraeinrichtung (1, 2) Bildsensoren vorgesehen sind, welche für Infrarotlicht empfindlich sind, bevorzugt für Infrarotlicht aus dem Wellenlängenbereich 1000 bis 1500 nm.

## Claims

1. Operating microscope, comprising a first camera device (1) for capturing and representing a reflection image of an object, a second camera device (2) for simultaneously capturing and representing a further image of the object, and an image processing device configured to connect at least one first image (22), which is acquired by the first camera device (1), to at least one further image (23), which is acquired by the second camera device (2), the images (22, 23) being selected by the image processing device and composited to form an overall image (24), **characterized in that** the selection criterion is a predefined sharpness quality of the images (22, 23).

2. Operating microscope according to Claim 1, **characterized in that** at least one camera device (1, 2) has at least two cameras.

3. Operating microscope according to Claim 1 or 2, **characterized in that** at least one camera device (1, 2) is configured or both camera devices (1, 2) are configured to perform image recordings in the video mode.

4. Operating microscope according to one of the preceding claims, **characterized in that** the camera devices are configured to represent the images in real time, preferably with almost no delay.

5. Operating microscope according to one of the preceding claims, **characterized in that** at least one camera device (1, 2) is configured or both camera devices (1, 2) are configured to perform three-dimensional image recordings.

6. Operating microscope according to one of the preceding claims, **characterized in that** the two camera devices (1, 2) are configured to acquire different light intensities.

7. Operating microscope according to one of the preceding claims, **characterized in that** the two camera units or camera devices (1, 2) are configured to operate with different exposure times.

8. Operating microscope according to one of the preceding claims, **characterized in that** the further image is configured as a fluorescence image of the object.

9. Operating microscope according to one of the preceding claims, **characterized in that** at least one illumination device (4a, 4b) having a fluorescence excitation light source (5) is provided.

10. Operating microscope according to one of the preceding claims, **characterized in that** a bandpass filter (21) is provided, which is placed in front of the second camera device (2) so that a light pencil component (19) incident on the second camera device (2) has to pass through the bandpass filter (21).

11. Operating microscope according to one of the preceding claims, **characterized in that** image sensors which are sensitive for infrared light, preferably for infrared light from the wavelength range of 1000 to 1500 nm, are provided in the first and/or second camera device (1, 2).

## Revendications

1. Microscope opératoire, comprenant un premier dispositif de caméra (1) pour la capture et l'affichage d'une image de réflexion d'un objet, un second dispositif de caméra (2) pour la capture et l'affichage simultanés d'une autre image de l'objet, et un dispositif de traitement d'images qui est configuré pour combiner au moins une première image (22) capturée par le premier dispositif de caméra (1) avec au moins une autre image (23) capturée par le second dispositif de caméra (2), les images (22, 23) étant sélectionnées par le dispositif de traitement d'images et assemblées en une image globale (24), **caractérisé en ce que** le critère de sélection est une qualité de netteté prédéfinie des images (22, 23).

2. Microscope opératoire selon la revendication 1, **caractérisé en ce qu'**au moins un dispositif de caméra (1, 2) comporte au moins deux caméras.

3. Microscope opératoire selon la revendication 1 ou 2, **caractérisé en ce qu'**au moins un dispositif de caméra (1, 2) est configuré, ou les deux dispositifs de caméra (1, 2) sont configurés, pour réaliser des enregistrements d'images en mode vidéo.

4. Microscope opératoire selon l'une quelconque des revendications précédentes, **caractérisé en ce que** les dispositifs de caméra sont configurés pour afficher les images en temps réel, de préférence pratiquement sans retard.

5. Microscope opératoire selon l'une quelconque des revendications précédentes, **caractérisé en ce qu'**au moins un dispositif de caméra (1, 2) est configuré, ou les deux dispositifs de caméra (1, 2) sont configurés, pour réaliser des enregistrements d'images tridimensionnels.

6. Microscope opératoire selon l'une quelconque des revendications précédentes, **caractérisé en ce que** les deux dispositifs de caméra (1, 2) sont configurés pour capturer des intensités lumineuses différentes.

7. Microscope opératoire selon l'une quelconque des revendications précédentes, **caractérisé en ce que** les deux unités de caméra ou les deux dispositifs de caméra (1, 2) sont configurés pour fonctionner avec des temps d'exposition différents.

8. Microscope opératoire selon l'une quelconque des revendications précédentes, **caractérisé en ce que** l'autre image est conçue sous forme d'image de fluorescence de l'objet.

9. Microscope opératoire selon l'une quelconque des revendications précédentes, **caractérisé en ce qu'**il est prévu au moins un dispositif d'éclairage (4a, 4b) comprenant une source de lumière d'excitation de fluorescence (5).

10. Microscope opératoire selon l'une quelconque des revendications précédentes, **caractérisé en ce qu'**il est prévu un filtre passe-bande (21) qui est placé en amont du second dispositif de caméra (2) de sorte qu'une composante de faisceau lumineux (19) incidente sur le second dispositif de caméra (2) doit passer à travers le filtre passe-bande (21).

11. Microscope opératoire selon l'une quelconque des revendications précédentes, **caractérisé en ce qu'**il est prévu dans le premier et/ou le second dispositif de caméra (1, 2) des capteurs d'image qui sont sensibles à la lumière infrarouge, de préférence à la lumière infrarouge dans la gamme de longueurs d'onde de 1000 à 1500 nm.
